Europäisches Patentamt

European Patent Office

Office européen des brevets

(19)

(11) Numéro de publication: **0 292 349**
**B1**

(12) **FASCICULE DE BREVET EUROPEEN**

(45) Date de publication du fascicule du brevet: **23.01.91**

(51) Int. Cl.⁵: **G 01 V 1/18**

(21) Numéro de dépôt: **88401085.1**

(22) Date de dépôt: **04.05.88**

(54) Géophone comportant un élément sensible en polymère piézoélectrique.

(30) Priorité: **19.05.87 FR 8706990**

(43) Date de publication de la demande:
**23.11.88 Bulletin 88/47**

(45) Mention de la délivrance du brevet:
**23.01.91 Bulletin 91/04**

(84) Etats contractants désignés:
**AT BE CH DE ES FR GB GR IT LI LU NL SE**

(56) Documents cités:
**GB-A-2 055 018**
**GB-A-2 170 008**
**US-A-3 360 772**
**US-A-4 315 433**
**US-A-4 333 029**

**MACHINE DESIGN, vol. 47, no. 13, 29 mai 1975,
page 31, Cleveland, US: "Aerospace
accelerometer comes down to earth"**

(73) Titulaire: **THOMSON-CSF**
**51, Esplanade du Général de Gaulle**
**F-92800 Puteaux (FR)**

(72) Inventeur: **Gragnolati, Claude**
**THOMSON-CSF SCPI 19, avenue de Messine**
**F-75008 Paris (FR)**
Inventeur: **Thollon, Didier**
**THOMSON-CSF SCPI 19, avenue de Messine**
**F-75008 Paris (FR)**
Inventeur: **Malcor, Jean-Georges**
**THOMSON-CSF SCPI 19, avenue de Messine**
**F-75008 Paris (FR)**

(74) Mandataire: **Desperrier, Jean-Louis et al**
**THOMSON-CSF SCPI**
**F-92045 PARIS LA DEFENSE CEDEX 67 (FR)**

(56) References cited:

**IEEE TRANSACTIONS ON INDUSTRIAL
ELECTRONICS, vol. IE-30, no. 1, février 1983,
pages 1-6, IEEE, New York, US; J.S. HUNTER et
al.: "Development of low-cost multifunction
sensors for lightweight fire and forget antitank
weapon system"**

Courier Press, Leamington Spa, England.

## Description

La présente invention se rapporte aux géophones, c'est-à-dire aux dispositifs qui permettent de détecter les vibrations, sonores ou infrasonores, notamment de l'écorce terrestre. Elle concerne plus particulièrement les géophones comportant un élément sensible formé avec un polymère piézoélectrique bilame du type de ceux définis parle préambule de la revendication 1.

Il est connu, par exemple du brevet US 4 144 520, de réaliser un géophone en utilisant un aimant permanent formant masse inertielle suspendue dans un boîtier, lui-même en contact avec le milieu soumis aux vibrations à détecter, c'est-à-dire le plus souvent le sol. Un solenoïde est bobiné sur le boîtier, de telle manière que les mouvements de l'aimant à l'intérieur du boîtier induisent une tension électrique dans ce solenoîde. Ces mouvements sont dus à l'inertie de l'aimant, qui reste sensiblement immobile lorsque le boîtier vibre en étant entraîné par les mouvements du sol, suite à un tremblement de terre par exemple.

On connaît des matériaux polymères, ou copolymères, qui, lorsqu'ils sont convenablement traités, présentent des propriétés piézoélectriques. Le matériau le plus connu est le polyfluorure de vinylidène, connu sous l'abréviation de $PVF_2$.

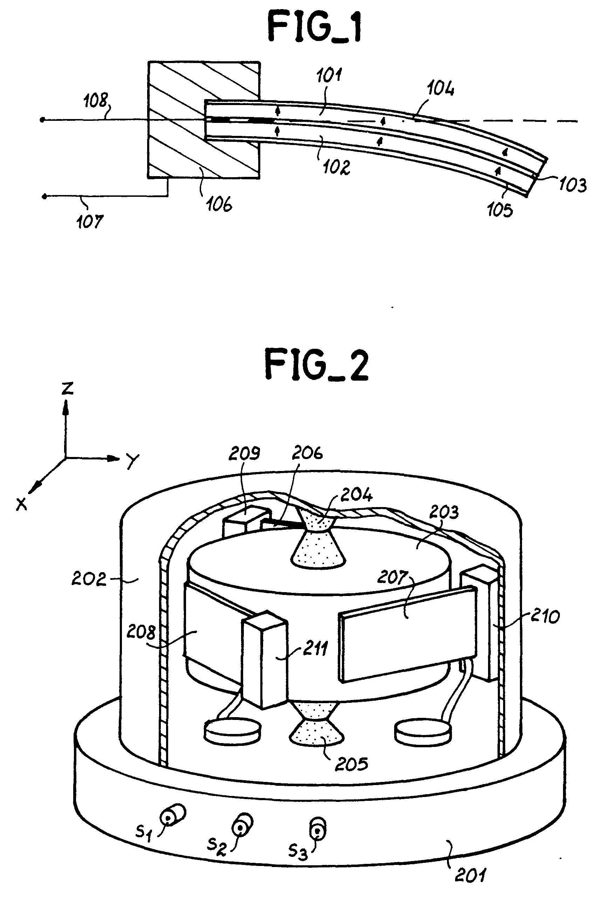

On sait réaliser un capteur bilame, tel que représenté sur la figure 1, en utilisant deux lames 101 et 102 superposées et séparées par une électrode conductrice 103. Ces lames sont polarisées dans le même sens, et leurs surfaces extérieures sont recouvertes d'électrodes conductrices 104 et 105. Ce bilame est encastré dans une pièce 106, qui permet ici également la connexion aux électrodes extérieures 104 et 105 et à une connexion de sortie 107. L'électrode centrale 103 est elle-même réunie à une deuxième connexion de sortie 108.

Lorsqu'on soumet, comme sur la figure, ce bilame à un mouvement de flexion par rapport à la pièce d'encastrement 106 il apparaît entre les connexions 107 et 108 un signal électrique d'autant plus grand que le mouvement de flexion du bilame est grand.

Une variante de réalisation consiste à utiliser deux couches de $PVF_2$ polarisées dans des sens contraires et à prendre le signal de sortie entre les électrodes externes.

On sait également réaliser des capteurs microphoniques à base de polymère piézoélectrique, comme décrit par exemple dans le brevet français 2 542 552 de la demanderesse. Il est bien certain qu'en fixant un tel microphone sur le sol on obtiendra à la sortie de celui-ci un léger signal dû au mouvement de ce même sol. Toutefois la sensibilité d'un tel système est tout à fait médiocre en raison de l'absence de masse inertielle, et la fréquence de résonance sera beaucoup trop haute pour pouvoir détecter correctement les vibrations infra-sonores.

On connaît aussi des capteurs à base de polymère piézoélectrique, comme décrit par exemple dans le brevet GB—A—2 055 018, où un, élément de ce polymère est en castré aux deux extrémités.

Pour obtenir un géophone à sensibilité améliorée et à résonance très basse fréquence du genre précité, l'invention propose les caractéristiques techniques figurant dans la partie caractérisante de la revendication 1, c'est-à-dire d'utiliser une masse inertielle suspendue très librement dans un boîtier, et de munir ce boîtier d'au moins un bilame en polymère piézoélectrique venant s'encastrer d'un côté dans le boîtier et prenant librement appui par l'une de ses faces sur la masse inertielle.

D'autres particularités et avantages de formes d'éxécution de l'invention apparaîtront clairement dans la descritpion suivante présentée en regard des figures annexées qui représentent:

la figure 1: une vue en coupe d'un bilame en polymère piézoélectrique connu;

la figure 2: une vue en arraché d'un géophone selon l'invention;

la figure 3: un schéma explicatif du fonctionnement du géophone de la figure 2; et

la figure 4: un schéma d'une variante du géophone de la figure 2.

Le géophone représenté sur la figure 2, comprend un socle 201 définissant un plan horizontal XY.

Un capot 202, représenté en arraché sur la figure pour montrer l'intérieur du géophone, vient recouvrir la surface supérieure du socle 201 en délimitant un espace intérieur dans lequel sont placés les éléments principaux du géophone. Ce capot forme avec le socle le boîtier du géophone.

Une masse inertielle 203, ayant la forme d'un cylindre, dont l'axe est vertical selon une direction Z perpendiculaire à XY, est suspendue à l'intérieur du capot 202 par des moyens de fixation élastiques 204 et 205. Dans l'exemple représenté, ces moyens de fixation sont formés de diabolos, en matériau viscoélastique à module de cisaillement faible, prenant appui, pour l'un entre la face supérieure de la masse inertielle et le fond interne supérieur du capot, et pour l'autre entre la face inférieure de la masse inertielle et le socle 201.

On connaît de tels matériaux, des gels par exemple, qui permettant d'assurer la suspension verticale de la masse inertielle tout en présentant une résistance quasiment nulle au déplacement de cette masse dans le plan XY, c'est-à-dire une très grande compliance.

A titre de variante de réalisation on pourrait utiliser des billes placées entre la masse inertielle, le socle et le capot, ou bien même des ressorts très souples.

Un ensemble de trois bilames 206 à 208, en polymère piezoélectrique, encastrés à une extrémité dans des pièces d'encastrement 209 à 211, sont fixés par leur pièce d'encastrement régulièrement à 120° l'un de l'autre sur la face interne verticale du capot 202. Ces bilames viennent s'appuyer par une face sur trois génératrices, elles-mêmes réparties à 120° sur la face latérale de cette masse. Ils maintiennent ainsi ladite masse inertielle centrée au milieu du capot en l'absence de tout effort particulier.

A titre de variante les pièces d'encastrement peuvent faire partie du capot 202 en étant obtenues lors de l'usinage de celui-ci.

Pour obtenir une réponse correcte, il faut que les bilames soient parfaitement encastrés dans leur pièce support et que celle-ci soit parfaitement maintenue sur le capot, de telle manière que la dérivée de la déformée lors de la flexion des bilames, qui correspond à la loi de déformation de ceux-ci, soit nulle à l'endroit de l'encastrement.

Dans son mouvement dans le plan XY, la masse tend à se rapprocher de certains bilames en les déformant et donc à s'éloigner des autres. Il est tout à fait nécessaire que les bilames restent toujours en contact avec la masse inertielle. Pour cela on les positionne pour obtenir une précontrainte telle que lorsque la masse inertielle s'éloigne d'un bilame elle diminue cette précontrainte, et que le bilame tend à suivre la masse en se redressant et en maintenent le contact avec la surface de celle-ci.

Les sorties de chaque bilame sont reliées à des amplificateurs de charge. Ces amplificateurs sont formés, de manière connue, d'un amplificateur opérationnel rebouclé avec une capacité en parallèle avec une résistance, de manière à ce que l'amplification soit déterminée essentiellement par le rapport entre cette capacité et la capacité du bilame. Les signaux de ces amplificateurs de charge, qui sont avantageusement disposés à l'intérieur du capot, sont disponibles sur des sorties $S_1$ à $S_3$ fixées sur le socle 201.

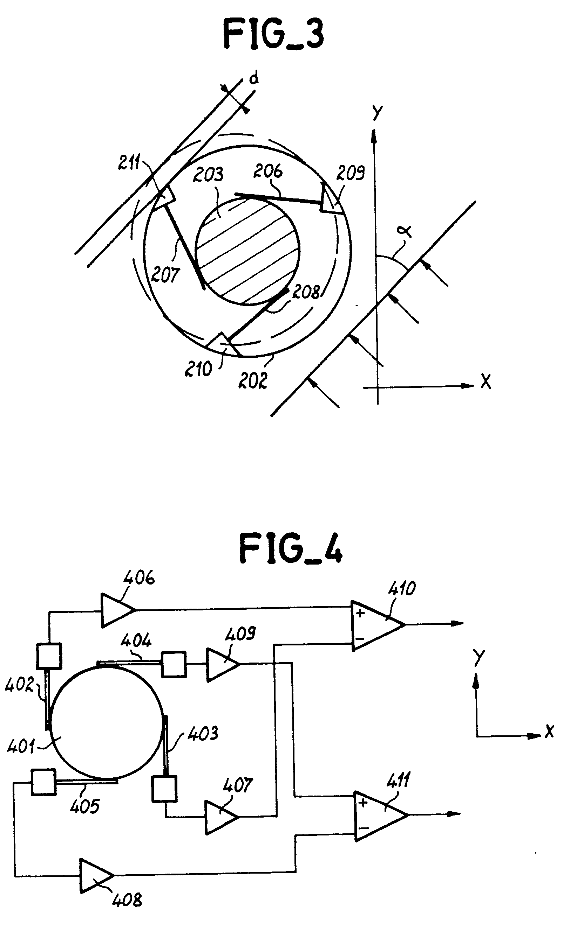

Le signal délivré par un bilame est fonction de l'amplitude du mouvement de la masse inertielle dans une direction perpendiculaire à la surface de cette masse le long de la génératrice de contact avec le bilame. Comme ces bilames sont répartis régulièrement à 120° sur le poutour du cylindre, et que l'on connaît leurs positions dans le plan XY, les trois signaux ainsi obtenus permettent de déterminer complètement, par un traitement connu, le mouvement relatif de la masse inertielle par rapport au boîtier. Dans un exemple simple, représenté sur la figure 3, une onde plane, formant un angle γ avec la direction Y, fait bouger le boîtier 202 entre deux positions, représentées l'une en traits pleins, et l'autre en traits pointillés. Ce déplacement est maximum d'une valeur d dans une direction perpendiculaire au front d'onde.

La souplesse du $PVF_2$ permet de réaliser des bilames ayant une fréquence propre de résonance très basse, par exemple inférieure à 1 Hz pour un bilame ayant une longueur de 35 mm et une épaisseur de 0,5 mm.

Dans ces conditions la réponse du géophone est essentiellement déterminée par les caractéristiques de la masse inertielle et de sa suspension viscoélastique. En utilisant ce géophone au-dessus de la fréquence de résonance de la masse inertielle suspendue, celui-ci fonctionne en capteur de déplacement dans une bande de fréquences limitée en bas par la fréquence de résonance et en haut par la décroissance de l'amplitude du signal de sortie. Celui-ci décroît en effet régulièrement en fonction de la fréquence. On peut obtenir, selon les caractérisques des moyens de suspension utilisés, une bande de fréquences qui peut atteindre trois décades entre 1 Hz et 1 kHz.

Il existe toute une gamme de matériaux viscoélastiques permettant de réaliser une suspension en forme de diabolo comme sur la figure 2 et d'ajuster la fréquence de résonance entre 1 Hz et 100 Hz.

Dans une variante de réalisation, représentée schématiquement en figure 4, on utilise une masse inertielle 401 et 4 bilames 402 à 405, répartis régulièrement autour de la masse inertielle tous les 90°. On a donc deux paires de bilames respectivement 402, 403 et 404, 405 dans lesquelles les bilames d'une même paire sont diamètralement opposés, et ces paires sont orthogonales entre elles.

Après amplification par des amplificateurs de charge 406 à 409, les signaux des bilames sont appliqués dans des amplificatuers différentiels 410 et 411. Les signaux d'une même paire sont appliqués respectivement aux entrées + et − d'un même amplificateur différentiel ce qui, compte tenu du positionnement des bilames, correspond à une sommation de ces signaux.

Les signaux de sortie de ces ampilficateurs différentiels donnent donc directement l'ampiltude de la phase du déplacement de la masse inertielle 401 selon les deux directions X et Y. On simplifie ainsi le traitement ultérieur de ces signaux, au prix toutefois d'une légère complication de construction mécanique, puisque le système ainsi obtenu est hyperstatique et que le centrage de l'ensemble doit être plus rigoureux.

Il est à noter que les amplificateurs de charge peuvent être incorporés aux amplificateurs différentiels.

L'invention s'étend également au cas d'un géophone triaxial comportant une masse inertielle, par exemple sphérique, et au moins 4 bilames venant s'appuyer sur cette masse sphérique, par exemple aux quatre coins d'un tétraèdre régulier.

**Revendications**

1. Géophone comportant une boîtier (201, 202), une masse inertielle (203), des moyens élastiques (205—204) de suspension de cette masse au boîtier, et des moyens de mesure (206—208) des déplacement de la masse par rapport au boîtier, ces moyens de mesure comprenant au moins un bilame (206—208) en polymère piézoélectrique fixé rigidement au boîtier (202), caractérisé en ce que chacun desdits bilame est fixé au boîtier par des moyens d'encastrement de l'une de ses extrémites, l'autre venant s'appuyer librement sur la masse inertielle (203).

2. Géophone selon la revendication 1, caractérisé en ce que la masse inertielle (203) présente une surface cylindrique dont l'axe est perpendiculaire à un plan de mesure (X,Y) du géophone, et que le bilame (206—208) vient s'appuyer par l'une de ses faces sur une génératrice de cette surface.

3. Géophone selon la revendication 2, caractérisé en ce qu'il comprend 3 bilames (206—208) sensiblement identiques répartis régulièrement autour de ladite surface cylindrique pour s'appuyer sur 3 génératrices de cette surface situées à 120° les unes des autres.

4. Géophone selon la revendication 2, caractérisé en ce qu'il comprend 4 bilames (406—409) sensiblement identiques répartis régulièrement autour de ladite surface cylindrique pour s'appuyer sur 4 génératrices de cette surface situées à 90° les unes des autres.

5. Géophone selon l'une quelconque des revendications 2 à 4, caractérisé en ce que les moyens de suspension sont formés de diabolos (204, 205) en matériau viscoélastique à grande compliance venant s'appuyer d'un côté sur le boîtier (202) et de l'autre respectivement sur les centres des faces terminales de la masse inertielle (203).

6. Géophone selon la revendication 1, caractérisé en ce que la masse inertielle (203) est une sphère, et qu'il comporte au moins 4 bilames (206—208) répartis régulièrement autour de la sphère en s'appuyant chacun par une face sur un point de cette sphère pour pouvoir mesurer les déplacements de celle-ci dans les trois dimensions (X, Y, Z).

7. Géophone selon la revendication 6, caractérisé en ce que les points d'appui des quatre bilames sont répartis sur les sommets d'un trétraèdre régulier.

8. Géophone selon l'une quelconque des revendications 1 à 7, caractérisé en ce que dans la position de repos de la masse inertielle (203) celle-ci vient précontraindre le bilame (206—208) dans une position fléchie qui tend à se redresser lorsque la masse s'en éloigne.

**Patentansprüche**

1. Geophon mit einem Gehäuse (201, 202), einer trägen Masse (203), elastischen Mitteln (205—204) zur Aufhängung der Masse im Gehäuse und Mitteln (206—208) zum Messen der Verschiebung der Masse gegenüber dem Gehäuse, wobei die Meßmittel mindestens eine Doppelschichtlamelle (206—208) aus einem piezoelektrischen Polymer aufweisen, die starr am Gehäuse (202) befestigt ist, dadurch gekennzeichnet, daß jede Doppellamelle am Gehäuse durch Mittel zum Einbetten eines ihrer Enden befestigt ist, während sich das andere Ende frei an der trägen Masse (203) abstützt.

2. Geophon nach Anspruch 1, dadurch gekennzeichnet, daß die träge Masse (203) eine zylindrische Oberfläche besitzt, deren Achse senkrecht zu einer Meßebene (X, Y) verläuft, und daß sich die Doppelschichtlamelle (206, 208) mit einer ihrer Seiten auf einer Erzeugenden der Oberfläche abstützt.

3. Geophon nach Anspruch 2, dadurch gekennzeichnet, daß es drei im wesentlichen identische Doppelschichtlamellen besitzt, die regelmäßig um die zylindrische Oberfläche im gegenseitigen Abstand von 120° zur Abstützung auf drei Erzeugenden der Oberfläche verteilt sind.

4. Geophon nach Anspruch 2, dadurch gekennzeichnet, daß es vier im wesentlichen identische Doppelschichtlamellen besitzt, die regelmäßig um die zylindrische Oberfläche im gegenseitigen Abstand von 90° zur Abstützung auf vier Erzeugenden der Oberfläche verteilt sind.

5. Geophon nach einem beliebigen der Ansprüche 2 bis 4, dadurch gekennzeichnet, daß die Aufhängemittel (204, 205) diaboloförmig und aus viskoelastischem Material großer Steifigkeit ausgebildet sind und sich einseitig am Gehäuse (202) mit der anderen Seite in der Mitte der Stirnflächen der trägen Masse (203) abstützen.

6. Geophon nach Anspruch 1, dadurch gekennzeichnet, daß die träge Masse (203) eine Kugel ist, und daß sie mindestens vier regelmäßig um die Kugel verteilte Doppelschichtlamellen (206—208) aufweist, die sich je mit einer Seite auf einem Punkt der Kugel zum Messen der Verschiebung desselben entlang den drei Koordinatenachsen (X, Y, Z) abstützen.

7. Geophon nach Anspruch 6, dadurch gekennzeichnet, daß die Abstützpunkte der vier Doppelschichtlamellen über die Ecken eines regelmäßigen Tetraeders verteilt sind.

8. Geophon nach einem beliebigen der Ansprüche 1 bis 7, dadurch gekennzeichnet, daß in der Ruhestellung der trägen Masse (203) dieselbe die Doppelschichtlamelle (203—208) in eine gebogene Stellung vorspannt, während die Lamelle in die gestreckte Stellung zurückstrebt, wenn sich die Masse aus der Ruhestellung auslenkt.

**Claims**

1. A geophone, comprising a housing (201, 202), an inertial mass (203), resilient suspension means (205—204) for suspending said mass inside the housing, and means (206—208) for measuring the displacements of the mass relative to the housing, said measuring means comprising at least one twin-layered blade (206—208) made of piezoelectric polymer material and rigidly secured to the housing, characterized in that each one of said blades is secured to the housing by means for embedding one of its ends, whereas the other end bears freely on the inertial mass (203).

2. A geophone according to claim 1, characterized in that the inertial mass (203) has a cylindrical surface whose axis is perpendicular to a measurement plane (X, Y) of the geophone, and in that the twin-layered blade (206—208) bears via one of its faces on a generatrix of said surface.

3. A geophone according to claim 2, characterized in that it comprises three substantially identical twin-layered blades (206—208) which are regularly spaced out around said cylindrical surface in order to bear on three generatrices of said surface which are mutually spaced apart by 120°.

4. A geophone according to claim 2, characterized in that it comprises four substantially identical twin-layered blades (406—409) which are regularly spaced out around said cylindrical surface in order to bear on four generatrices of said surface which are mutually spaced apart by 90°.

5. A geophone according to any one of claims 2 to 4, characterized in that the suspension means are formed by diabolotype elements (204, 205) made of viscoelastic, high compliance material arranged to bear upon the housing (202) by one end, and upon the centers of the terminal faces of the inertial mass (203) by the other side respectively.

6. A geophone according to claim 1, characterized in that the inertial mass (203) is a sphere, and in that it comprises at least four twin-layered blades (206—208) regularly spaced out around the sphere while each bearing upon a point of said sphere via one face so as to enable the measurement of the displacements of the sphere along the three dimensions (X, Y, Z).

7. A geophone according to claim 6, characterized in that the bearing points of the four blades are distributed over the summits of a regular tetraeder.

8. A geophone according to any one of claims 1 to 7, characterized in that the inertial mass (203), when in its rest position, prestresses the blade (206—208) into a bent position, which tends to straighten again when the mass moves away.

# FIG_1

# FIG_2

EP 0 292 349 B1

# FIG_3

# FIG_4